# EUROPEAN PATENT APPLICATION

(11) **EP 3 495 027 A1**
(43) Date of publication of application: **12.06.2019**
(21) Application number: 17836316.4
(22) Date of filing: 25.07.2017
(51) Int. Cl.: A63F 13/217

(54) **METHOD AND SYSTEM FOR CIRCUMVENTING REAL ENVIRONMENT OBSTACLE BASED ON VR GAME**

(30) Priority: 05.08.2016 CN 201610635970
(71) Applicant: JRD Communication Inc., Shenzhen, Guangdong 518057 (CN)
(72) Inventor: SUN, Lingyun, Shenzhen Guangdong 518057 (CN)
(74) Representative: Petraz, Gilberto Luigi
(86) International application number: PCT/CN2017/094339
(87) International publication number: WO 2018/024134

(57) **Abstract**

A method and system for circumventing a real environment obstacle based on a VR game. The method comprises: after a smartphone detects information about the distance of an obstacle by means of a distance sensor, transmitting information about the distance to a VR device; after the VR device receives the information about the distance, determining whether the distance of the obstacle is less than a pre-set threshold; and when it is determined that the distance of the obstacle is less than the pre-set threshold, reminding a user of an obstacle ahead of same in the real environment.

## Description

### Field of the Invention

The present invention relates to the technical field of VR (virtual reality) and in particular to a method and system for circumventing an obstacle in a real environment based on a VR game.

### Description of the Related Art

VR (Virtual Reality) is a computer simulation system that can create and experience a virtual world. It produces a simulated environment in virtue of computers, which is an interactive system simulation of three-dimensional dynamic views and entity behaviors based on multi-source information fusion. The users will immerse themselves in this environment.

VR is to produce a simulation environment by virtue of computers, into which the users immerse themselves by various sensing devices to realize direct interaction. Since VR solves many practical problems to a great extent, saves the investment and is not affected by environment, VR is very popular in various fields such as entertainments, games, military affairs, and travelling. Now and for a very long period of time in the future, VR is increasingly developed to bring more stereo sensual experience.

VR has been widely applied in VR entertainments and games at present. However, in some scene modes, the use of entertainments and games is limited. When a user wearing VR glasses plays a corresponding game in an open space, he/she may touch surrounding obstacles (walls, pillars, stones or the like) in the real environment without any warning. This may degrade the VR game experience, and may even result in various degrees of physical injury.

### SUMMARY OF THE INVENTION

Embodiments of the present invention provide a method and system for avoiding an obstacle in a real environment based on a VR game, in order to avoid physical injury, by detecting the distance to an obstacle by a mobile phone, transmitting related information to a VR device after detecting an obstacle, quickly enlarging an image within the field of view or giving an audible warning by the VR device, and enabling the user to take measures correspondingly according to the sense of visual oppression or the audible warning to avoid an obstacle in a real environment.

The embodiments of the present invention employ the following technical solutions.

A method for avoiding an obstacle in a real environment based on a VR game is provided and comprises:
step A: transmitting distance information to a VR device when a smartphone detects information about a distance to an obstacle by a distance sensor;
step B: determining whether the distance to the obstacle is less than a preset threshold after the VR device receives the distance information; and
step C: warning a user that there is an obstacle in front in a real environment when it is determined that the distance to the obstacle is less than the preset threshold.

In the method for avoiding an obstacle in a real environment based on a VR game, before the step A, further comprising:
S: wirelessly connecting the smartphone to the VR device by a WIFI module or a Bluetooth module in advance so that both of them perform transmission of data and information, the VR device being a pair of VR glasses.

In the method for avoiding an obstacle in a real environment based on a VR game, the step A comprises:
A1: transmitting, after the smartphone detects a specific distance to an obstacle in a VR game, corresponding distance and location information to a data analysis module in the VR device via data synchronization; and
A2: storing a value of the determined distance that is analyzed by the data analysis module in the VR device for comparison with the preset distance threshold.

In the method for avoiding an obstacle in a real environment based on a VR game, the step B comprises:
B 1: comparing, after the VR device receives the distance information, the value of the determined distance to the obstacle stored in the VR device with the preset threshold, running the VR device normally when it is determined that the distance to the obstacle is greater than or equal to the preset threshold, and making another determination when the distance changes; and
B2: activating a related function of the VR device when it is determined that the distance to the obstacle is less than the preset threshold, so as to warn the user of a risk of colliding with the obstacle.

In the method for avoiding an obstacle in a real environment based on a VR game, the step C comprises:
C1: a way of warning the user that there is an obstacle in front in a real environment when it is determined that the distance to the obstacle is less than the preset threshold is that the VR device activates an image enlarge algorithm to enlarge a game scene in a field of view of the user in order to create a sense of visual oppression or that the VR device gives an audible warning; and
C2: taking measures correspondingly, by the user, according to the sense of visual oppression or the audible warning to avoid the obstacle in front in the real environment.

In the method for avoiding an obstacle in a real environment based on a VR game, the preset threshold for the distance to the obstacle is 5m.

A system for avoiding an obstacle in a real environment based on a VR game is provided and comprises:
a distance sensor;
one or more processors;
a memory; and
one or more applications stored in the memory and configured to be executed by the processors;
a data communication module configured to wirelessly connect a smartphone to a VR device via a WIFI module or a Bluetooth module in advance so that both of them perform transmission of data and information, the VR device being a pair of VR glasses;
an obstacle detection module configured to transmit distance information to a VR device when the smartphone detects the information about a distance to the obstacle by the distance sensor;
a distance determination module configured to determine whether the distance to the obstacle is less than a preset threshold when the VR device receives the distance information; and
an obstacle warning module configured to warn a user that there is an obstacle in front in a real environment when it is determined that the distance to the obstacle is less than the preset threshold.

In the system for avoiding an obstacle in a real environment based on a VR game, the obstacle detection module comprises:
a data transmission unit configured to transmit, after the smartphone detects a specific distance to an obstacle in a VR game, corresponding distance and location information to a data analysis module in the VR device via data synchronization; and
a storage and comparison unit configured to store a value of the determined distance that is analyzed by the data analysis module in the VR device for comparison with the preset distance threshold.

In the system for avoiding an obstacle in a real environment based on a VR game, the distance determination module comprises:
a first determination unit configured to compare, after the VR device receives the distance information, the value of the determined distance to the obstacle stored in the VR device with the preset threshold, run the VR device normally when it is determined that the distance to the obstacle is greater than or equal to the preset threshold, and make another determination when the distance changes; and
a second determination unit configured to activate a related function of the VR device when it is determined that the distance to the obstacle is less than the preset threshold, so as to warn the user of a risk of colliding with the obstacle.

In the system for avoiding an obstacle in a real environment based on a VR game, the obstacle warning module comprises:
a warning method unit configured to warn the user that there is an obstacle in front in a real environment when it is determined that the distance to the obstacle is less than the preset threshold by controlling the VR device to activate an image enlarge algorithm to enlarge a game scene in a field of view of the user in order to create a sense of visual oppression or controlling the VR device to give an audible warning; and
an obstacle avoiding unit configured to enable the user to take measures correspondingly according to the sense of visual oppression or the audible warning to avoid the obstacle in front in the real environment.

In the system for avoiding an obstacle in a real environment based on a VR game, the preset threshold for the distance to the obstacle is 5m.

A system for avoiding an obstacle in a real environment based on a VR game is provided and comprises: a distance sensor; one or more processors; a memory; and one or more applications stored in the memory and configured to be executed by the processors; wherein the one or more applications comprise instructions that perform the following steps of:
transmitting distance information to a VR device when a smartphone detects information about a distance to an obstacle by a distance sensor;
determining whether the distance to the obstacle is less than a preset threshold after the VR device receives the distance information; and
warning a user that there is an obstacle in front in a real environment when it is determined that the distance to the obstacle is less than the preset threshold.

In the system for avoiding an obstacle in a real environment based on a VR game, before the step of transmitting distance information to a VR device when a smartphone detects information about a distance to an obstacle by a distance sensor, the one or more applications comprise instructions that perform a step of:
wirelessly connecting the smartphone to the VR device by a WIFI module or a Bluetooth module in advance so that both of them perform transmission of data and information, the VR device being a pair of VR glasses.
In the system for avoiding an obstacle in a real environment based on a VR game, in the step of transmitting distance information to a VR device when a smartphone detects information about a distance to an obstacle by a distance sensor, the one or more applications comprise instructions that perform:
transmitting, after the smartphone detects a specific distance to an obstacle in a VR game, corresponding distance and location information to a data analysis module in the VR device via data synchronization; and
storing a value of the determined distance that is analyzed by the data analysis module in the VR device for comparison with the preset distance threshold.

In the system for avoiding an obstacle in a real environment based on a VR game, in the step of determining whether the distance to the obstacle is less than a preset threshold after the VR device receives the distance information, the one or more applications comprise instructions that perform:
B1: comparing, after the VR device receives the distance information, the value of the determined distance to the obstacle stored in the VR device with the preset threshold, running the VR device normally when it is determined that the distance to the obstacle is greater than or equal to the preset threshold, and making another determination when the distance changes; and
B2: activating a related function of the VR device when it is determined that the distance to the obstacle is less than the preset threshold, so as to warn the user of a risk of colliding with the obstacle.

In the system for avoiding an obstacle in a real environment based on a VR game in the step of warning a user that there is an obstacle in front in a real environment when it is determined that the distance to the obstacle is less than the preset threshold, the one or more applications comprise instructions that perform:
C1: a way of warning the user that there is an obstacle in front in a real environment when it is determined that the distance to the obstacle is less than the preset threshold is that the VR device activates an image enlarge algorithm to enlarge a game scene in a field of view of the user in order to create a sense of visual oppression or that the VR device gives an audible warning; and
C2: taking measures correspondingly, by the user, according to the sense of visual oppression or the audible warning to avoid the obstacle in front in the real environment.

In the system for avoiding an obstacle in a real environment based on a VR game, the preset threshold for the distance to the obstacle is 5m.

The present invention discloses a method and system for circumventing a real environment obstacle based on a VR game. The method comprises: transmitting distance information to a VR device when a smartphone detects information about a distance to an obstacle by a distance sensor; determining whether the distance to the obstacle is less than a preset threshold after the VR device receives the distance information; and warning a user that there is an obstacle in front in a real environment when it is determined that the distance to the obstacle is less than the preset threshold. In the present invention, by detecting the distance to an obstacle by a mobile phone, transmitting related information to a VR device after detecting an obstacle, quickly enlarging an image within the field of view or giving an audible warning by the VR device, and enabling the user to take measures correspondingly according to the sense of visual oppression or the audible warning to avoid an obstacle in a real environment, the user is warned that there is an obstacle in front in a real environment. Such a warning method greatly omits the need to stop the VR game to avoid an obstacle, so that the user can avoid the obstacle before colliding with it without influencing the VR game experience, and physical injury is avoided.

### BRIEF DESCRIPTION OF THE DRAWINGS

Fig. 1 is a flowchart of a preferred embodiment of a method for avoiding an obstacle in a real environment based on a VR game, according to the present invention.
Fig. 2 is a functional block diagram of a preferred embodiment of a system for avoiding an obstacle in a real environment based on a VR game, according to the present invention.

### DETAILED DESCRIPTION OF THE PREFERRED EMBODIMENTS

To make the objectives, technical solutions and advantages of the present invention understood clearer, the present invention will be further described below in details by embodiments with reference to the accompanying drawings. It should be understood that the specific embodiments to be described herein are merely for explaining the present invention, rather than limiting the present invention.

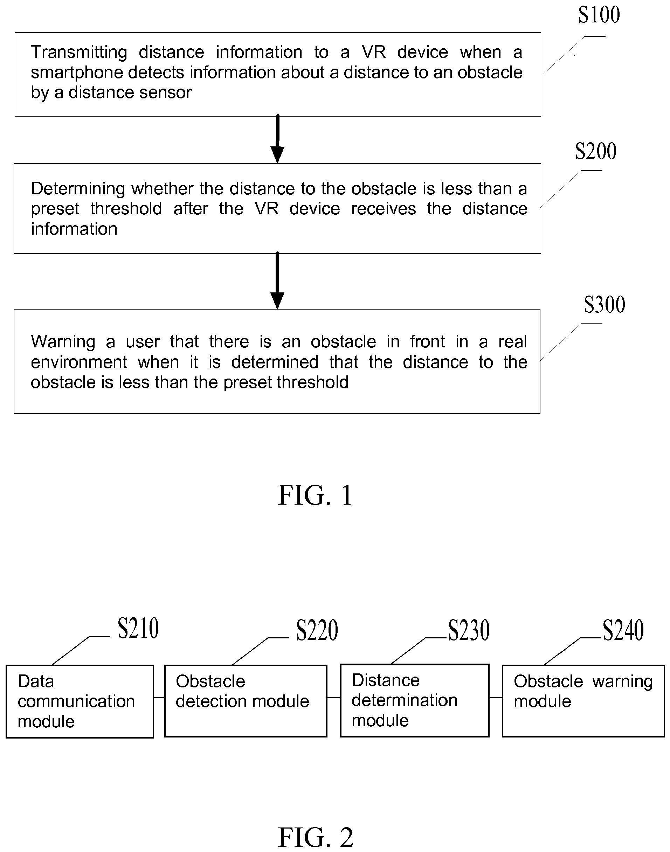

Fig. 1 is a flowchart of a preferred embodiment of a method for avoiding an obstacle in a real environment based on a VR game, according to the present invention.

As shown in Fig. 1, the method for avoiding an obstacle in a real environment based on a VR game in an embodiment of the present invention comprises the following steps.

In Step S100: Distance information is transmitted to a VR device when a smartphone detects the information about a distance to the obstacle by a distance sensor.

When running a game by the VR device, the smartphone can detect a distance from the user to an obstacle by an obstacle distance detection method including, but not limited to, using a proximity sensor; and after the smartphone detects the specific distance from the user to the obstacle, corresponding distance and location data information is transmitted to the VR device via data and information synchronization.

In the present invention, before the step S100, the method further comprises: wirelessly connecting the smartphone to the VR device by a WIFI module or a Bluetooth module in advance so that they can perform transmission of data and information, the VR device being a pair of VR glasses. The step S100 comprises: transmitting, after the smartphone detects a specific distance to an obstacle in a VR game, corresponding distance and location information to a data analysis module in the VR device via data synchronization; and storing a value of the determined distance that is analyzed by the data analysis module in the VR device for comparison with the preset distance threshold.

VR glasses are products integrating the simulation technology with the computer graphics, man-machine interface technology, multimedia technology, sensing technology, network technology and the like. It is a novel human-machine interaction implemented by virtue of computers and the latest sensor technology to realize interlaced display and picture switchover.

The principle of interlaced display is to divide one picture into two image fields, i.e., an odd-numbered-scanning-line image field or an odd image field formed by a plurality of odd-numbered scanning lines and an even-numbered-scanning-line image field or an even image field formed by a plurality of even-numbered scanning lines. During constructing three-dimensional imaging by interlacing display, the user can place the left-eye image and the right-eye image separately in the odd image field and the even image field (or vice-versa), and this is called three-dimensional interlacing format. In the case of using shutter three-dimensional glasses and interlacing display together, a vertical field synchronization signal may be regarded as a shutter switchover synchronization signal. That is, when an odd image field (i.e., a right-eye picture) is displayed, one eye will be blocked by the three-dimensional glasses; and when displaying an even image field, the other eye will be blocked.

In such a way, the purpose of three-dimensional imaging is realized.

The principle of picture switchover is to interactively display, on a screen, the left-eye image and the right-eye image. In the case of using three-dimensional glasses and such a three-dimensional display mode together, the purpose of three-dimensional imaging can be realized just by regarding a vertical synchronization signal as a shutter switchover synchronization signal. In the case of using other three-dimensional imaging devices, the left-eye image and the right-eye image (pictures separated by a vertical synchronization signal) are separately transmitted to a left-eye display device and a right-eye display device.

In Step S200: It is determined whether the distance to the obstacle is less than a preset threshold after the VR device receives the distance information.

A threshold is preset in the smartphone. The preset threshold for the distance to the obstacle is preferably 5m. This distance should not be too long to influence the user's virtual game experience, or too short to result in physical injury due to the failure in detecting the obstacle. After the VR device receives the distance information, when it is determined that the distance to the obstacle is less than the preset threshold, 5m, a related function of the VR device is activated to warn the user of a risk of colliding with the obstacle.

Step S200 comprises: comparing, after the VR device receives the distance information, the value of the determined distance to the obstacle stored in the VR device with the preset threshold, running the VR device normally when it is determined that the distance to the obstacle is greater than or equal to the preset threshold, and making another determination when the distance changes; and activating a related function of the VR device when it is determined that the distance to the obstacle is less than the preset threshold, to warn the user of a risk of colliding with the obstacle.

In Step S300: The user is warned that there is an obstacle in front in a real environment when it is determined that the distance to the obstacle is less than the preset threshold.

In the present invention, the step S300 comprises: a way of warning the user that there is an obstacle in front in a real environment when the distance to the obstacle is less than the preset threshold is that the VR device activates an image enlarge algorithm to enlarge a game scene in a field of view of the user in order to create a sense of visual oppression or that the VR device gives an audible warning; and enabling the user to take measures correspondingly, by the user, according to the sense of visual oppression or the audible warning to avoid the obstacle in front in the real environment.

Image enlarging is one of basic operations for image processing, and has been widely used in medical images, remote sensing images, webpage creation, and some commercial image processing software. Image enlarging is an image processing technique that converts low-resolution into high-resolution. Enlarging an image is actually a process of image interpolation. In the present invention, when it is detected that an obstacle may cause injury to the user during the game, the game scene in the field of view of the user is enlarged in time to warn the user not to move forward, in order to avoid physical injury.

The VR device may give an audible warning. For example, when it is detected that the distance to the obstacle is less than the preset threshold, 5m, the voice broadcast function of the VR device is activated to give a warning "Be careful, the distance to an obstacle in front is less than 5m", in order to warn the user to avoid the obstacle in front.

The user may take measures correspondingly according to the sense of visual oppression or the audible warning to avoid the obstacle in front in the real environment, after the VR device makes a related determination. The measures include: the user stops moving forward due to the visual stimulation or the audible warning, and instead, he/she moves backward timely. In this way, the user avoids colliding with the obstacle in front. Such a warning method greatly spare the user the need of stopping the VR game for avoiding an obstacle, therefore the user can avoid the obstacle before colliding with it without influencing his/her VR gaming experience and also possible physical injury is avoided.

During this process, the user does not have to stop the ongoing VR game. He/she just needs to keep himself/herself away from the obstacle when knowing the distance to the obstacle and the location of the obstacle, without interrupting the VR game experience.

On the basis of the above embodiment, the present invention further provides a system for avoiding an obstacle in a real environment based on a VR game. The system comprises: a distance sensor, one or more processors, a memory, and one or more applications, wherein the one or more applications are stored in the memory and configured to be executed by the processors, and the one or more applications comprise operating instructions for executing the aforementioned method for avoiding an obstacle in a real environment based on a VR game.

Fig. 2 is a functional block diagram of a preferred embodiment of a system for avoiding an obstacle in a real environment based on a VR game, according to the present invention.

As shown in Fig. 2, the system comprises: a distance sensor; one or more processors; a memory; one or more applications, wherein the one or more applications are stored in the memory and configured to be executed by the processors;
a data communication module 210 configured to wirelessly connect a smartphone to a VR device by a WIFI module or a Bluetooth module in advance so that they can perform transmission of data and information, the VR device being a pair of VR glasses, the detail of which refers to the above description;
an obstacle detection module 220 configured to transmit distance information to the VR device when the smartphone detects the information about a distance to an obstacle by the distance sensor, the detail of which refers to the above description;
a distance determination module 230 configured to determine whether the distance to the obstacle is less than a preset threshold when the VR device receives the distance information, the detail of which refers to the above description; and
an obstacle avoiding module 240 configured to warn a user that there is an obstacle in front in a real environment when it is determined that the distance to the obstacle is less than the preset threshold, the detail of which refers to the above description.

Further, in the system for avoiding an obstacle in a real environment based on a VR game, the obstacle detection module specifically comprises:
a data transmission unit configured to transmit, after the smartphone detects a specific distance to an obstacle in a VR game, corresponding distance and location information to a data analysis module in the VR device via data synchronization, the detail of which refers to the above description; and
a storage and comparison unit configured to store a value of the determined distance that is analyzed by the data analysis module in the VR device for comparison with the preset distance threshold, the detail of which refers to the above description.

In the system for avoiding an obstacle in a real environment based on a VR game, the distance determination module specifically comprises:
a first determination unit configured to compare, after the VR device receives the distance information, the value of the determined distance to the obstacle stored in the VR device with the preset threshold, run the VR device normally when it is determined that the distance to the obstacle is greater than or equal to the preset threshold, and make another determination when the distance changes, the detail of which refers to the above description; and
a second determination unit configured to activate a related function of the VR device when it is determined that the distance to the obstacle is less than the preset threshold, to warn the user of a risk of colliding with the obstacle, the detail of which refers to the above description.

In the system for avoiding an obstacle in a real environment based on a VR game, the obstacle warning module specifically comprises:
a warning method unit configured to warn the user that there is an obstacle in front in a real environment when it is determined that the distance to the obstacle is less than the preset threshold by causing the VR device to activate an image enlarge algorithm to enlarge a game scene in a field of view of the user in order to create a sense of visual oppression or controlling the VR device to give an audible warning, the detail of which refers to the above description; and
an obstacle avoiding unit configured to enable the user to take measures correspondingly according to the sense of visual oppression or the audible warning to avoid the obstacle in front in the real environment.

In conclusion, the present invention relates to the technical field of VR (virtual reality) and discloses a method and system for avoiding an obstacle in a real environment based on a VR game. The method comprises: transmitting distance information to a VR device when a smartphone detects the information about a distance to the obstacle by a distance sensor; determining whether the distance to the obstacle is less than a preset threshold after the VR device receives the distance information; and warning a user that an obstacle is in front in a real environment when it is determined that the distance to the obstacle is less than the preset threshold. In the present invention, by detecting the distance to an obstacle by a mobile phone, transmitting related information to a VR device after detecting an obstacle, quickly enlarging an image within the field of view or giving an audible warning by the VR device, and enabling the user to take measures correspondingly according to the sense of visual oppression or the audible warning to avoid an obstacle in a real environment, the physical injury is avoided.

Of course, it may be understood by a person of ordinary skill in the art should that all or part of the flows in the embodiments of the method may be implemented by instructing related hardware (for example, processors, controllers or the like) by using computer programs, and the programs may be stored in a computer-readable storage medium, and the programs, when executed, may include the flows of the embodiments of the method. The storage medium may be a memory, a magnetic disk, an optical disc or the like.

It should be understood that the present invention is not limited to the above examples, and a person of ordinary skill in the art may make various improvements or modifications to the above description and those improvements or modifications shall fall into the protection scope defined by the appended claims of the present invention.

## Claims

1. A method for avoiding an obstacle in a real environment based on a VR game, comprising:
step A: transmitting distance information to a VR device when a smartphone detects information about a distance to an obstacle by a distance sensor;
step B: determining whether the distance to the obstacle is less than a preset threshold after the VR device receives the distance information; and
step C: warning a user that there is an obstacle in front in a real environment when it is determined that the distance to the obstacle is less than the preset threshold.

2. The method for avoiding an obstacle in a real environment based on a VR game according to claim 1, before the step A, further comprising:
S: wirelessly connecting the smartphone to the VR device by a WIFI module or a Bluetooth module in advance so that both of them perform transmission of data and information, the VR device being a pair of VR glasses.

3. The method for avoiding an obstacle in a real environment based on a VR game according to claim 1, wherein the step A comprises:
A1: transmitting, after the smartphone detects a specific distance to an obstacle in a VR game, corresponding distance and location information to a data analysis module in the VR device via data synchronization; and
A2: storing a value of the determined distance that is analyzed by the data analysis module in the VR device for comparison with the preset distance threshold.

4. The method for avoiding an obstacle in a real environment based on a VR game according to claim 1, wherein the step B comprises:
B1: comparing, after the VR device receives the distance information, the value of the determined distance to the obstacle stored in the VR device with the preset threshold, running the VR device normally when it is determined that the distance to the obstacle is greater than or equal to the preset threshold, and making another determination when the distance changes; and
B2: activating a related function of the VR device when it is determined that the distance to the obstacle is less than the preset threshold, so as to warn the user of a risk of colliding with the obstacle.

5. The method for avoiding an obstacle in a real environment based on a VR game according to claim 1, wherein the step C comprises:
C1: a way of warning the user that there is an obstacle in front in a real environment when it is determined that the distance to the obstacle is less than the preset threshold is that the VR device activates an image enlarge algorithm to enlarge a game scene in a field of view of the user in order to create a sense of visual oppression or that the VR device gives an audible warning; and
C2: taking measures correspondingly, by the user, according to the sense of visual oppression or the audible warning to avoid the obstacle in front in the real environment.

6. The method for avoiding an obstacle in a real environment based on a VR game according to claim 1, wherein the preset threshold for the distance to the obstacle is 5m.

7. A system for avoiding an obstacle in a real environment based on a VR game, comprising:
a distance sensor;
one or more processors;
a memory; and
one or more applications stored in the memory and configured to be executed by the processors;
a data communication module configured to wirelessly connect a smartphone to a VR device via a WIFI module or a Bluetooth module in advance so that both of them perform transmission of data and information, the VR device being a pair of VR glasses;
an obstacle detection module configured to transmit distance information to the VR device when the smartphone detects the information about a distance to the obstacle by the distance sensor;
a distance determination module configured to determine whether the distance to the obstacle is less than a preset threshold when the VR device receives the distance information; and
an obstacle warning module configured to warn a user that there is an obstacle in front in a real environment when it is determined that the distance to the obstacle is less than the preset threshold.

8. The system for avoiding an obstacle in a real environment based on a VR game according to claim 7, wherein the obstacle detection module comprises:
a data transmission unit configured to transmit, after the smartphone detects a specific distance to an obstacle in a VR game, corresponding distance and location information to a data analysis module in the VR device via data synchronization; and
a storage and comparison unit configured to store a value of the determined distance that is analyzed by the data analysis module in the VR device for comparison with the preset distance threshold.

9. The system for avoiding an obstacle in a real environment based on a VR game according to claim 7, wherein the distance determination module comprises:
a first determination unit configured to compare, after the VR device receives the distance information, the value of the determined distance to the obstacle stored in the VR device with the preset threshold, run the VR device normally when it is determined that the distance to the obstacle is greater than or equal to the preset threshold, and make another determination when the distance changes; and
a second determination unit configured to activate a related function of the VR device when it is determined that the distance to the obstacle is less than the preset threshold, so as to warn the user of a risk of colliding with the obstacle.

10. The system for avoiding an obstacle in a real environment based on a VR game according to claim 7, wherein the obstacle warning module comprises:
a warning method unit configured to warn the user that there is an obstacle in front in a real environment when it is determined that the distance to the obstacle is less than the preset threshold by controlling the VR device to activate an image enlarge algorithm to enlarge a game scene in a field of view of the user in order to create a sense of visual oppression or controlling the VR device to give an audible warning; and
an obstacle avoiding unit configured to enable the user to take measures correspondingly according to the sense of visual oppression or the audible warning to avoid the obstacle in front in the real environment.

11. A system for avoiding an obstacle in a real environment based on a VR game, comprising:
a distance sensor;
one or more processors;
a memory; and
one or more applications stored in the memory and configured to be executed by the processors; wherein the one or more applications comprise instructions that perform steps of:
transmitting distance information to a VR device when a smartphone detects information about a distance to an obstacle by the distance sensor;
determining whether the distance to the obstacle is less than a preset threshold after the VR device receives the distance information; and
warning a user that there is an obstacle in front in a real environment when it is determined that the distance to the obstacle is less than the preset threshold.

12. The system for avoiding an obstacle in a real environment based on a VR game according to claim 11, wherein, before the step of transmitting distance information to a VR device when a smartphone detects information about a distance to an obstacle by a distance sensor, the instructions further perform a step of:
wirelessly connecting the smartphone to the VR device by a WIFI module or a Bluetooth module in advance so that both of them perform transmission of data and information, the VR device being a pair of VR glasses.

13. The system for avoiding an obstacle in a real environment based on a VR game according to claim 11, wherein the step of transmitting distance information to a VR device when a smartphone detects information about a distance to an obstacle by a distance sensor comprises:
transmitting, after the smartphone detects a specific distance to an obstacle in a VR game, corresponding distance and location information to a data analysis module in the VR device via data synchronization; and
storing a value of the determined distance that is analyzed by the data analysis module in the VR device for comparison with the preset distance threshold.

14. The system for avoiding an obstacle in a real environment based on a VR game according to claim 11, wherein the step of determining whether the distance to the obstacle is less than a preset threshold after the VR device receives the distance information comprises:
B1: comparing, after the VR device receives the distance information, the value of the determined distance to the obstacle stored in the VR device with the preset threshold, running the VR device normally when it is determined that the distance to the obstacle is greater than or equal to the preset threshold, and making another determination when the distance changes; and
B2: activating a related function of the VR device when it is determined that the distance to the obstacle is less than the preset threshold, so as to warn the user of a risk of colliding with the obstacle.

15. The system for avoiding an obstacle in a real environment based on a VR game according to claim 11, wherein the step of warning a user that there is an obstacle in front in a real environment when it is determined that the distance to the obstacle is less than the preset threshold comprises:
C1: a way of warning the user that there is an obstacle in front in a real environment when it is determined that the distance to the obstacle is less than the preset threshold is that the VR device activates an image enlarge algorithm to enlarge a game scene in a field of view of the user in order to create a sense of visual oppression or that the VR device gives an audible warning; and
C2: taking measures correspondingly, by the user, according to the sense of visual oppression or the audible warning to avoid the obstacle in front in the real environment.

16. The system for avoiding an obstacle in a real environment based on a VR game according to claim 11, wherein the preset threshold for the distance to the obstacle is 5m.
